# EUROPEAN PATENT APPLICATION

(11) **EP 1 494 009 A1**
(43) Date of publication of application: **05.01.2005**
(21) Application number: 04253451.1
(22) Date of filing: 10.06.2004
(51) Int. Cl.: G01N 21/90, G01N 21/21, B08B 9/46, B07C 5/342

(54) **Container inspection machine**

(30) Priority: 30.06.2003 US 610418
(71) Applicant: Emhart Glass S.A., 6330 Cham (CH)
(72) Inventor: Diehr, Richard D., Horseheads, New York 14845 (US)
(74) Representative: Warren, Anthony Robert

(57) **Abstract**

A machine is provided for inspecting a portion of a container, for example the base of a bottle (10), which is conveyed to an inspection location. A source of polarized light (12) illuminates the bottle and a beam splitter (19) divides the beam into a first polarized beam and a second beam of light which has had its polarity rotated. One camera (21) images the first polarized beam, and a second camera (22) images the second beam of light. The images from the two cameras are evaluated periodically by a processor (24), and an appropriate defect signal is issued when a defect is detected.

## Description

The present invention relates to machines which inspect containers such as bottles for defects and more particularly to a system for inspecting the bottom of a bottle for defects.

Machines for inspecting glass bottles and the like are performing more and more inspections using camera technology. One of the areas of interest is the base of a bottle, and a system may look at the base as an opaque or transparent object to identify defects.

It is an object of the present invention to provide a machine for inspecting glass containers which can, at a single inspection station, conduct a pair of different inspections for defects in the bottom of a container.

According to the present invention, there is provided a machine for inspecting a portion of a container as defined in claim 1.

The present invention will now be described with reference to the accompanying drawings which illustrate a presently preferred embodiment incorporating the principles of the invention, and in which:
Figure 1 is an oblique view of a system for inspecting the bottom of a bottle for defects which has two cameras;
Figure 2 is a view of a portion of the image of one of the cameras which indicates a defect; and
Figure 3 is a view of the same portion of the image of the other one of the cameras which indicates the same defect.

A single camera lens, dual camera imaging system is illustrated. A bottle 10 is being carried through an inspection machine by a belt type drive which may have upper and lower belts 11 engaging the front and rear walls of the bottle. The belt type drive removes a bottle from an infeed conveyor, conveys the bottle through an inspection location and then releases the bottle to an outfeed conveyor. An inspection system is located at the inspection location and includes a light source assembly 12 which includes a light source 14 which directs light axially upwardly through the bottle, and a polarizer 16 which polarizes the light before it reaches the bottle.

The camera assembly includes a lens 18 which directs the polarized light to a polarizing beam splitter 19 and a pair of cameras 21,22 which image each of the beams. Polarized light passes through the bottom of the bottle, upwardly through the opening of the bottle to the beam splitter, and images the bottom of the bottle on the image plane of the first camera 21. Figure 2 illustrates how a defect, for example an inclusion 24, might appear to the first camera. The image resulting from the inclusion 24 is the shadow or field having an outline and/or (reduced) light intensity dependent upon the nature of the particular defect.

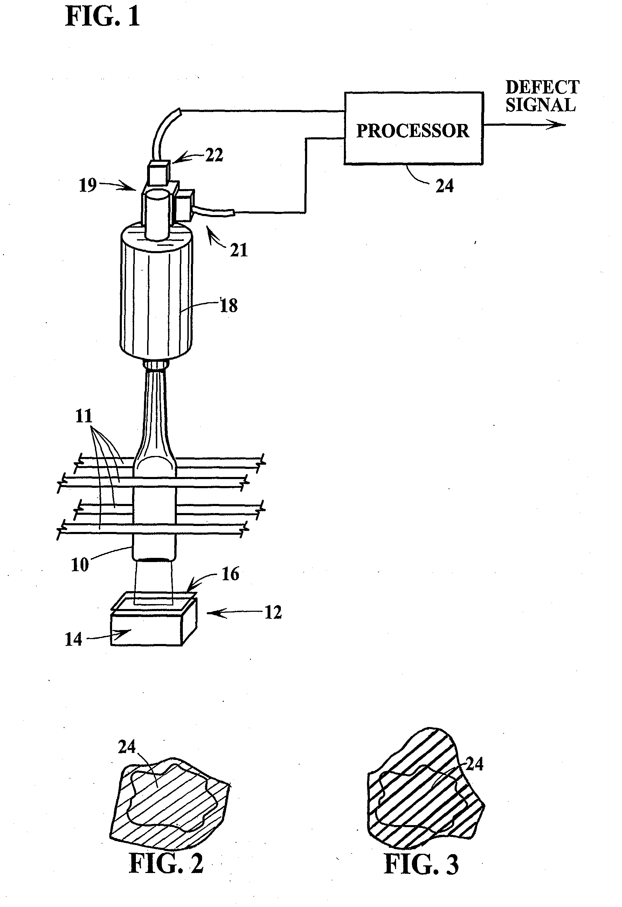

Polarized light which passes through the bottom of the bottle proximate a defect where base stress will be present, will be rotated, and the beam splitter will redirect this rotated polarized light to the second camera 22. Figure 3 illustrates how this same defect (inclusion) 24 with the same outline and in the same position could appear to the second camera, i.e. as a shadow or field having an outline and/or intensity dependent upon the nature of the particular defect.

The image of each camera is evaluated periodically by a Processor 26 and a suitable defect signal will be issued when a defect is detected.

## Claims

1. A machine for inspecting a portion of a container which is conveyed to an inspection location comprising
a source of polarized light for illuminating a container,
a camera system for imaging the illuminated container including
a first camera,
a second camera, and
a beam splitter for directing the polarized light to said first camera and for directing polarized light, which has been rotated as a result of a defect in the container, to said second camera.

2. A machine for inspecting a container according to claim 1, wherein the portion of the container to be inspected is the bottom of the container.

3. A machine for inspecting a container according to claim 1 or 2, wherein said source of polarized light comprises a light source and a polarizer for polarizing the light.
